# EUROPEAN PATENT APPLICATION

(11) **EP 2 549 197 A2**
(43) Date of publication of application: **23.01.2013**
(21) Application number: 12170148.6
(22) Date of filing: 31.05.2012
(51) Int. Cl.: F24J 2/24, F28D 7/04, F28D 9/04, F28D 21/00, F24H 1/43

(54) **A panel used in fluid mechanics**

(30) Priority: 19.07.2011 TR 201107095 U
(71) Applicant: Eroglu Isi Endustri Cihazlari Sanayii Ve Ticaret Anonim Sirketi, Istanbul (TR)
(72) Inventor: Eroglu, Mehmet, Istanbul (TR)
(74) Representative: Iskender, Ibrahim

(57) **Abstract**

The present invention relates to a panel (1) that provides obtaining high parameters of heat transfer and film applied in fluid mechanics, the production of whose geometric structure which increases heat transfer is easy, which is made of metal derivatives such as stainless steel, iron sheet, black iron sheet, aluminum plate, copper plate etc.

## Description

### TECHNICAL FIELD

The present invention relates to a panel that provides at least two times the energy on equivalent surfaces thanks to its geometric structure, that enables fuel saving by being used in processes in the industrial facilities as well as being used for heating purposes in condensing, central, domestic hot water boilers, that decreases emission values by enabling fuel saving as result of serving as an economizer installed in the chimneys of domestic and industrial boilers which are in operating mode.

Heat transfer that is provided with flue gas moving in the inner surface of panel or with fluid or air moving in the panel is benefited much more efficiently thanks to the geometric structure of the body of the panel. Moreover, it is possible to give a shape to the panel in a way to be suitable for the place of use as its production technique is easy and it can be applied a geometry so as to increase heat transfer in production.

### STATE OF THE ART

Consumers use boilers which work with fluid, gas or solid fuels for the purpose of heating in indoor areas today. The efficiency to be obtained in the said boilers during the heat transfer processes is an important factor.

The said boilers consist of roughly a body, a combustion chamber where the fuel is ignited, a burner functioning as an igniter and a container where the heated water is moving. Furnace serves the most important function in the transfer of heat. There are various developments in the state of the art in this regard.

In the Turkish Utility Model document numbered TR 2006 05901 with the title "multi-pass, compact heat exchanger with cylindrical spinner for condensing combi boilers and regular boilers" which is one of these developments, it is disclosed how elliptic pipes increase heat efficiency. The most important technical specification mentioned in the document is that water circulating along the internal walls takes the latent heat of evaporation from hot gas and enables the water vapor in gas to condense. But in the said document, there is one single channel through which water flows in and out in the panel which is implemented. Also it does not have integrity as the panel has and its geometric structure is partially circular. The fluid which heats and is heated cannot provide cross flow and the speed values do not show continuity in the said panel. In view of the mentioned specifications, a fully efficient implementation cannot be carried out.

In the Chinese Patent Document numbered CN 2013 49339 which is another document included in the state of art, a convoluted heating panel is explained. Since the movement of water in the said panel provides a parallel flow, namely a cross current cannot be provided; efficiency cannot be obtained from heat transfer process.

As stated above, there is not mentioned that the fluids which is heated and heats in the panels contained in the boilers rotate from the same center and in reverse directions, shows linear and circular movement and heat transfer reaches the highest level in small areas and it is a panel which can be post-implemented to the existing boilers in the state of art.

As a consequence, it reveals the necessity for improvement in the relevant technical field due to the technical problems in the known technique recited in detail above.

### OBJECT OF THE INVENTION

The present invention aims to solve the problems given above by referring to the state of the art.

The object of the invention is to provide a panel which functions more efficiently in the heat transfer process by placing them in the boilers.

Another object of the invention is to create a panel that decreases emission values by providing fuel saving as a result of serving as an economizer being installed in the chimneys of domestic and industrial boilers which are in operating mode.

Another object of the invention is to create an environment friendly panel of which assembly and disassembly are ergonomic and do not harm environment.

Another object of the invention is to provide a panel that is made of metal derivatives such as stainless steel, iron sheet, black iron sheet, aluminum plate, copper plate etc.

Another object of the invention is to enable the panel subject to invention to be used in the heating systems including condensing combi, hot water (central heating) and superheated water boilers.

Another object of the invention is to enable the panel to be used as an economizer in the chimneys including chimneys of steam, hot water (central heating), superheated water, hot oil boilers, chimneys of steam generators, chimneys of marine boilers.

Another object of the invention is to achieve cost saving by using the boilers with water pipes which are manufactured in high flow rates and under high pressure as a panel between two drams.

Another object of the invention is to enable use as a solar panel in benefiting from solar energy, renewable energy sources. This way of use will provide cost saving by manufacturing the panel in the desired dimensions and geometry.

Another object of the invention is to enable benefiting from the environment friendly specification of the panel (by way of decreasing gas emission values and absorbing noise) by placing it in an appropriate place after manifold output of construction vehicles of diesel engine and to enable facilitating operators' working conditions during winter by way of heating air.

Another object of the invention is to provide a healthy air heating system by transferring the burned gas directly to the environment with the purpose of benefiting from environment friendly specification (condensation) of the panel in the facilities which are in need of recuperator and hot air. Also it is an object of the invention to enable use of the panel as an air heater by placing it in the chimneys of industrial facilities.

The panel according to invention can be used in very various fields as cited above. The geometric structure of the body of the panel enables benefiting from the heat transfer much more efficiently by way of the flue gas moving in the inner surface of panel coming into contact with the fluid or air moving in the panel. It is possible to give a shape to the panel in a way to be suitable for the place of use as its production technique is easy and it can be applied a geometry so as to increase heat transfer in production.

### BRIEF DESCRIPTION OF FIGURES

Figure-1; General perspective view of the panel according to the present invention,
Figure-2; Side view of the panel according to the invention,

### REFERENCE NUMBERS

- **1**.: Panel
- **2.**: Pipe
- **3.**: Body
- **4.**: Input Channel
- **5.**: Output Channel
- **6.**: Free Space

### DETAILED DESCRIPTION OF THE INVENTION

There is a general perspective view of the panel (1) according to invention in Figure - 1. Panel (1), enables the parameters of heat transfer and film coefficient implemented in fluid mechanics to be seen high.

Panel (1) comprises;
- a body (3) which is made by at least more than one finned pipes (2) being coiled, whose geometric structure is snail-like in spiral shape, which provides heat transfer efficiency as the gas or fluid circulates in cross flows sweeping in the pipe (2),
- multiple input channel (4) depending on the speed of the fluid, through which the fluid and gas to circulate in the pipe (2) enter into body (3),
- at least one output channel (5) through which the fluid and gas to circulate in the pipe (2) leave the body (3),
- free space (6) in which the gas is provided to be burned and to move in the confined space sweeping the pipe (2) spaces while burning, which provides efficiency in heat transfer process.

The panel (1) according to invention is made from one single piece of metal derivative depending on its capacity such as stainless steel, iron sheet, black iron sheet, aluminum plate, copper plate etc.

In the invention, an efficient burning is provided thanks to the specifications of turbulent burning and gas leaving the system by returning from the same center and heat transfer is provided with cross flow. As a result of the geometry of the panel (1) and depending on this geometric structure, movement of gases increases the parameters of heat transfer and film coefficient. As a result, gas temperatures decrease in the chimneys and energy efficiency increases in the boiler.

The fluids heating/being heated are driven by reverse flow over the circular rings of the panel (1), thermal energy in gas passes rapidly on to water decreasing gas temperature to minimum levels while increasing water temperature to maximum level. Also, it is a distinctive specification that gas output temperature is under water output temperature.

Flue creates its way on its own thanks to the geometric structure of the panel (1). That the flue way comprises multiple channels is distinctive considering the balanceability of gas speeds due to its geometry.

The condensing panel (1) according to invention can be installed on boilers in general and even on operating boilers and chimneys. In another application of the panel, it is installed on the exhaust port of vehicles and it prevents any harm to environment by condensing exhaust gas that is dispersed to environment.

Geometric structure of the condensing panel (1) according to invention provides increase of efficiency thanks to movement of both gas and water in heat transfer processes. It is a product featuring ergonomic assembly and disassembly.

The panel (1) according to invention, in addition to being applicable to the condensing boilers stated in the detailed description, can be utilized;
- in heating systems including condensing combi, hot water (central heating) and superheated water boilers,
- as an economizer in the chimneys including chimneys of steam, hot water (central heating), superheated water, hot oil boilers, chimneys of steam generators, chimneys of industrial boilers, chimneys of marine boilers,
- between two drams in water pipes which are manufactured in high flow rates and under high pressure,
- as a solar panel in the process of benefiting from solar energy,
- by being placed in an appropriate place after manifold output of construction vehicles of diesel engine,
- in the facilities which are in need of recuperator and hot air,
- by being placed in the chimneys of industrial facilities.

Within the scope of this concept, the panel (1) subject to invention can be used to develop many various applications and the invention cannot be limited to the samples explained herein though, principally, it is as stated in the claims.

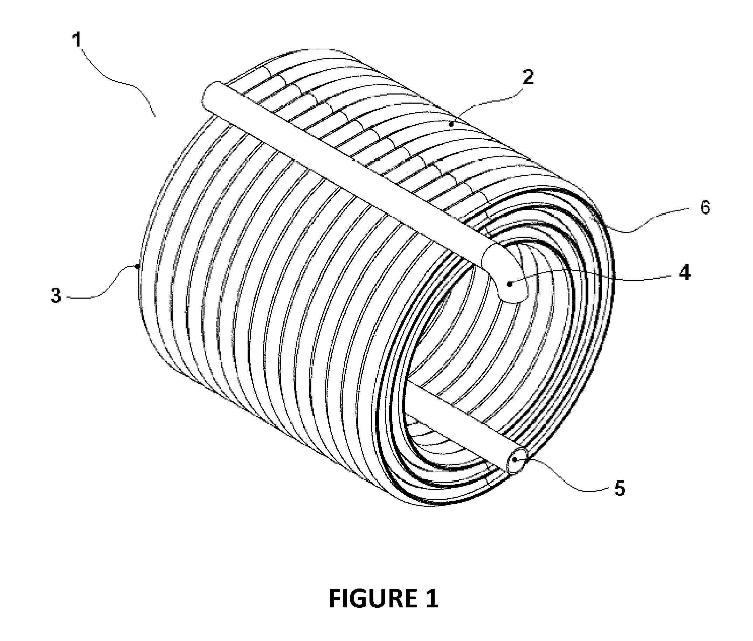

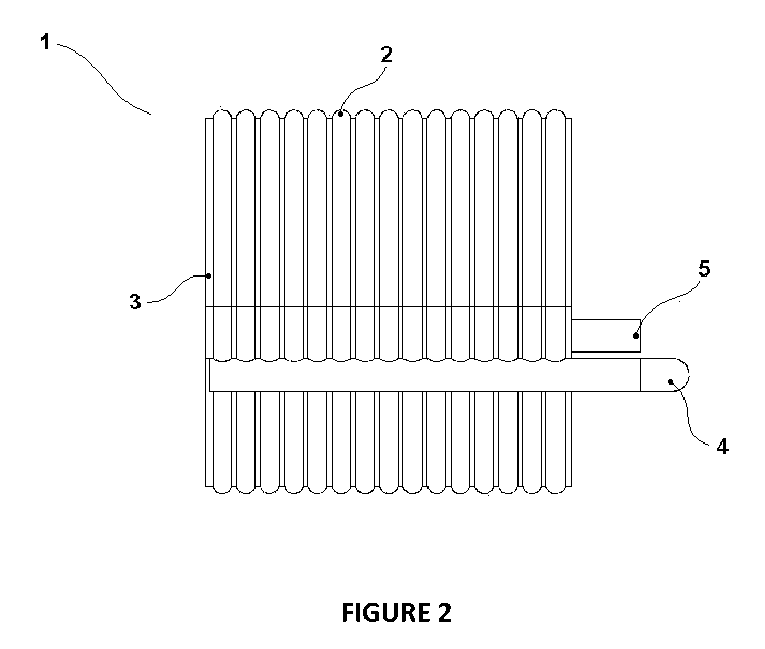

## Claims

1. The present invention is a panel (1) that provides obtaining high parameters of heat transfer and film applied in fluid mechanics, that is applicable in a geometric structure which increases heat transfer in production, that is made of metal derivatives such as stainless steel, iron sheet, black iron sheet, aluminum plate, copper plate etc.

2. A panel (1) according to Claim 1, **characterized in that** it comprises a body (3) which is of spiral shape being made of more than one pipes (2) being coiled which provides heat transfer efficiency as the gas or fluid circulates in cross flows sweeping in the pipe (2).

3. A panel (1) according to Claim 1, **characterized in that** it comprises multiple input channel (4) through which the fluid and gas to circulate in the pipe (2) enter into the body (3).

4. A panel (1) according to Claim 1, **characterized in that** it comprises multiple output channel (5) through which the fluid and gas to circulate in the pipe (2) leaves the body (3).

5. A panel (1) according to Claim 1, **characterized in that** it comprises a free space (6) in which the gas is provided to be burned and to move in the confined space sweeping the pipe (2) spaces while burning, which provides high efficiency in heat transfer process.
